# EUROPEAN PATENT APPLICATION

(11) **EP 1 458 147 A1**
(43) Date of publication of application: **15.09.2004**
(21) Application number: 03005847.3
(22) Date of filing: 14.03.2003
(51) Int. Cl.: H04L 12/56

(54) **Method and apparatus for configuring switches for routing traffic in a telecommunications network**

(71) Applicant: SIEMENS AKTIENGESELLSCHAFT, 80333 München (DE)
(72) Inventor: Geilfus, Dirk, 81476 München (DE); Meyer, Hannes, 83071 Stephanskirchen-Schlossb (DE); Schwank, Klaus-Peter, 82152 Martinsried (DE); Vierthaler, Richard, 80687 München (DE)

(57) **Abstract**

A configuration scheme (500) is provided for configuring switches (214) for routing data between a core router (206) to a plurality of host devices (212a..n) in a sub-network (204). The data is routed through at least two paths (216) between the core router (206) and at least one of the host devices (212) via the switches (214). In the case of the plurality of host devices having no redundant connection, the host devices (212a..n) are connected to a common switch (214). In the case of the plurality of host devices (212a..n) having a redundant connection, at least one host device (312) is connected to two switches (314a,b) that are directly connected to each other. An interruption (318) is sensed in any of the paths in the sub-network. The data is rerouted along a different path of the paths between the core router (206) and the at least one of the host devices (212) such that the interruption is circumvented (318).

## Description

The present invention relates to routing traffic in a telecommunications network and, more particularly, to configuring switches for providing a viable traffic flow in a network including an IP Core Router, Edge Routers and Hosts.

In a telecommunications network, data is transferred from one device to the next. This is typically accomplished using routing, wherein routing devices situated at network points determine the next network point to which data, normally packets, should be forwarded toward its destination. A packet may travel through a number of network points with routers before ultimately arriving at its destination. In telecommunications, a router is often included as part of a network switch.

By definition, a router is normally connected to at least two networks and decides which way to send each information packet based on its current understanding of the state of the networks it is connected to. A router, for example, may be located at a gateway where one network meets another, including each Internet point-of-presence. On the Internet, a router is a device or, in some cases, software in a computer.

A router may create or maintain a table of the available routes and their conditions. This information is used along with distance and cost algorithms to determine the best route for a given packet. More information regarding a widely-used routing system may be obtained from the definition provided by Network Layer 3 of the Open Systems Interconnection (OSI) model.

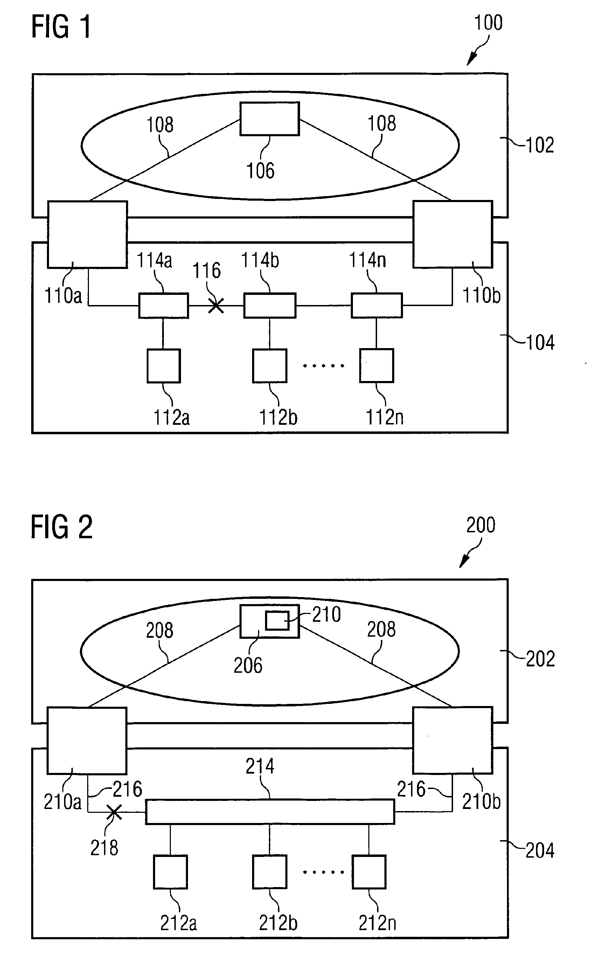

For purposes of analyzing problems which arise in routing data, we shall now consider the example Network 100 in Figure 1. In the figure, there is generally shown a network 102, which may be an Internet Network, that is coupled to a sub-network 104. A Core Router 106 forwards the data 108 to an Edge Router 110a, which sits at the boundary between the networks 102, 104 and, in turn, forwards the data to a particular Host (112a...112n). The data, particularly in the case of packets, are switched by switches 114a..n, to direct the packets to the corresponding host 112a..n.

The IP subnetwork (104) of the Hosts 112a..n in the figure are redundantly connected to a second Edge Router, or Back Up Edge Router, 110b. This is typically orchestrated using the Virtual Router Redundancy Protocol (VRRP), a protocol that provides a way to handle one or more backup routers when using a statically configured router on a local area network (LAN). Using VRRP, a virtual IP address is shared among the routers, with one designated as the master router and the others as backups. In case the master fails, the virtual IP address is mapped to a backup router's IP address. Thus, from the view of the Core Router, the Hosts are reachable through at least 2 paths, or routes. A more detailed understanding of VRRP can be obtained from Internet Protocol Versions 4 and 6 provided by the Internet Engineering Task Force (IETF).

The manner in which the data traffic is directed from the Core Router 106 to the Hosts 112a..n is achieved normally through two methods. First, the data may be routed using a technique known as load sharing, ie, balancing, that sends at least a portion of the data simultaneously via both paths. VRRP can be utilized for this purpose. Second, the data may be routed via a preferred of the two possible paths through the administration of an Open Shortest Path First (OSPF) protocol (which will be discussed later in conjunction with VRRP).

In this situation, the following problems arise. An interruption 116 in the connection between, for example, Switch 114a and Switch 114b does not affect the information exchange between the Edge Router 110a and the Core Router 106. Data sent to Host 112a is routed through the first Edge Router 110a and the first Switch 114a. Similarly, data sent to Host 112b is routed through the second Edge Router 110b, via the second switch 112b. Thus, the connection between either Edge Router 110a, 110b and the respective Switch 114a, b is still connected and active. However, the Edge Routers 110a,b do not notice the disconnection between the two Switches 114a, b.

This can be problematic in the case of load sharing, for example, where the Core Router 106 distributes the Traffic over both Edge Routers 110a, b. In this case, if an interruption 116 occurs, only half (or a portion) of the IP traffic within the sub-network 104 reaches its destination. For another thing, the data, ie, packets, for the second Host 112b (and further Hosts 112n) are lost when, for example, the preferred path is selected as the link to the first Edge Router 110a, and the connection between the first Switch 114a and the second Switch 114b is interrupted.

Heretofore, no routing control was provided in the case where no redundant connection exists. In that case, there would be no direct influence on the Core Router 106 when an interruption inside of the sub-network 104 occurs. However, the total traffic sent to the sub-network 104 would be interrupted. In the case were a redundant connection is provided for the sub-network, the afore-mentioned problems arise.

There has been no adequate solution, until now, of the afore-mentioned problems.

It is an object of the present invention to provide routing traffic control.

It is an object of the present invention to provide routing traffic control between an IP Network and a sub-network.

It is an object of the present invention to provide a redundant connection of a sub-network to a Core Router.

It is an object of the present invention to provide in every case a viable traffic flow from an IP Core router to Hosts, and vice versa.

It is an object of the present invention to provide a configuration of switches to provide a redundant connection.

The solution of the problem is achieved in the following set forth Configuration strategy for redundant connection of the sub-network to the edge, and vice versa.

The present invention satisfies these and other objectives by providing a system, method & apparatus for configuring switches for routing data between a core router and a plurality of host devices in a sub-network. The data is routed through at least two paths between the core router and at least one of the host devices via the switches. In the case of the plurality of host devices having no redundant connection, the host devices are connected to a common switch. In the case of the plurality of host devices having a redundant connection, a single host device is connected to two switches that are directly connected to each other. Thus, an interruption is sensed in any of the paths in the sub-network. The data is rerouted along a different path of the paths between the core router and the at least one of the host devices such that the interruption is circumvented.

A switch configuration for routing data between a core router and a plurality of host devices in a sub-network is provided where the host devices in the sub-network have no redundant connection. In this case, a plurality of paths are provided for routing the data in the sub-network between the core router and the plurality of host devices. A common switch is connected to the plurality of paths and further connected to the plurality of the host devices to switch the data between the plurality of paths to the plurality of host devices. With this configuration, there is provided redundant routing of the data between the core router and the host device.

The switch configuration for host devices having a redundant connection includes a first switch connected to a first path for switching data routed between the core router and a particular host device. A second switch is connected to a second path for switching data routed between the core router and the particular host device. With such a configuration, the first switch is connected directly to the second switch, thereby forming a tandem switch to provide redundant routing of the data between the core router and the host device.

With the configuration of the present invention, no separate route gateway security is needed. An interface interruption to the Host rectifies itself by way of the redundant Network Gateway. An interruption within the sub-network would be resolved and an update of the Core Router for the IP-Download Traffic controlled. With this configuration we can realize carrier grade connections of IP-Equipment for the IP-Download traffic or, for that matter, carrier grade IP-Upload traffic, without requiring additional security protocol IP-equipment.

By way of example, the invention shall now be described with reference to the several figures.
Fig. 1 illustrates a schematic diagram of a telecommunications network;
Fig. 2 illustrates a schematic diagram of the present invention;
Fig. 3 illustrates a schematic diagram of the present invention;
Fig. 4 illustrates a schematic diagram of the present invention; and
Fig. 5 illustrates a flow diagram of the present invention.

The present invention provides a configuration scheme for configuring switches to handle the afore-mentioned redundancy problems. Referring now to Figure 2, the configuration scheme 200 for a sub-network having no redundant connection is considered. As shown in the figure, an external network 202 is coupled with a sub-network 204. The Core Router 206 sends and receives data 208, which may be in the form of packets, via Edge Routers 210a, b to a particular one of the Host Devices 212a..n.

In the situation where there is no redundant connection, the present invention provides a common switch 214 as shown in Figure 2. More particularly, there is provided a single (or common) switch 214 that is connected to a plurality of paths 216 and further connected to the plurality of the host devices 212a..n. The common switch 214 switches the data between the plurality of paths 216 to the plurality of host devices 212a..n. In other words, the Sub-Network 204 (or additional Sub-networks) are always directly connected through a Switch 214 of both Edge Routers. With this configuration, there is provided redundant routing of the data between the core router and the host device.

In the case of data being routed from the Core Router 206 to a particular Host 212a, an interruption 218 in Figure 2 of the referenced link is noticed by the Edge Router 210a. The information regarding the interruption is provided according to the routing protocol of the sub-network to the Core Router 206. Within the Core Router 206, a corresponding Routing Table 220 is automatically calculated according to the functionality of the Core Router, such as provided by OSPF. With this arrangement, the Core Router reroutes the data flow according to the updated routing table and all data again reaches its Host destination.

In one aspect of the invention, there is provided a configuration scheme for a network that employs OSPF (Open Shortest Path First). In brief, OSPF is a router protocol usually used within larger autonomous system networks. Using OSPF, a host that obtains a change to a routing table or detects a change in the network immediately multicasts the information to all other hosts in the network so that all have the same routing table information. The host using OSPF sends only the part that has changed. OSPF multicasts the updated information only when a change has taken place. OSPF bases its path descriptions on "link states" that take into account additional network information. OSPF also lets the user assign cost metrics to a given host router so that some paths are given preference and supports a variable network sub-net mask so that a network can be subdivided. More information regarding OSPF can be obtained from the well-known literature.

When a Host routes traffic to the Core Router 206, according to the VRRP-Protocol, the connection in the Sub-network 204 between the Edge Routers 210a, b is monitored. When an interruption 218 occurs in the Interface Configuration to the Edge Router 210, such as a VRRP-Master, the connection is changed to the second Edge Router 210b, which may be a Back-up-VRRP-Router, for example.

In the particular figure, all Hosts are connected over exactly one Switch. Of course, the invention would tend to work best when all of the Hosts are connected to the common switch. However, the invention encompasses the situation where the common switch 214 is connected to a plurality of Hosts 212a,n to provide redundant connection for at least the connected Hosts.

According to the above-described invention, the VRRP handles redundant routing of the Sub-Network 204. For example, IP-Addresses for routing data, such as in a Pro-Gateway system, are instantiated according to the known VRRP-Process. Of course, the protocol may be other than a VRRP and may generally include any redundancy protocol.

It shall be appreciated that the Core Router 206 is capable of sensing an interruption in the sub-network. This was not possible before because the Core Router 206 is not part of the sub-network and cannot normally detect interruptions in a path in the sub-network. Particularly, in the problematic case explained with reference to Figure 1, it may be that the Core Router 106 routes the data along the first path and does not recognize an interruption in the second path. In the present invention, the common switch 214 is directly affected by the interruption in any path in the sub-network and this is sensed by the Core Router 206.

In the various aspects of the invention, the Core Router 206 may be part of a global data network, for example, the Internet. In the case of Figure 2, for example, the Core Router 206 routes IP Download Traffic 208 from the Internet Network 202 to the Edge Routers 210a, b. The Edge Routers could form part of a backbone, which is a set of paths that local or regional networks connect to for long-distance interconnection. The connection points could be network nodes or telecommunication data switching exchanges (DSEs).

To continue, the Configuration scheme of the present invention further provides a switching arrangement for Hosts having a redundant connection. The redundant connection may be an Ethernet connection provided by, for example, an Ethernet Splitter (not shown). Of course, the invention is not limited to a redundant connection, but may also be utilized for Hosts which have no redundant connection, which are maintained over a suitable splitter, for example.

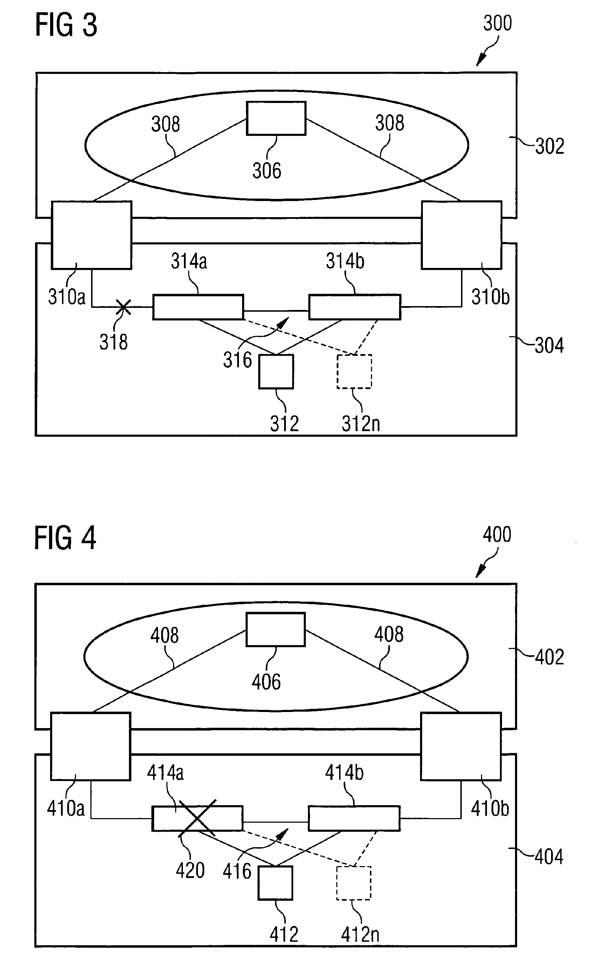

Now with reference to Figures 3 and 4, there is shown the exemplary configuration 300 (400) for a system having redundantly connected Hosts wherein a Network 302 is coupled to a Sub-Network 304. A Core Router 306 (406) routes data 308 (408) between the Network 302 (402) and the Sub-Network 304 (404) via Edge Routers 310a,b (410a,b). The data 308 (408) is routed to the Host 312 (412) via the switches 314a,b (414a,b). There may also be additional Hosts 312n (412n) attached to the tandem switch.

In the present invention, the redundant connections are established by at least a pair of Switches 314a, b, which are directly connected with each other in the form of a Tandem Switch. In more detail, a first switch 314a is connected to a first path (generally shown as the connection between the Edge Router 310a and Switch 314a) for switching data routed between the Core Router 306 and a particular Host Device 312. A second switch 314b is connected to a second path (generally shown as the connection between the Edge Router 310b and Switch 314b) for switching data routed between the core router and the particular host device. With such a configuration, the first switch is connected directly to the second switch, thereby forming a Tandem Switch 316 to provide redundant routing of the data between the core router and the host device.

The IP-subnetwork (or additional sub-networks) is shown as always directly connected over the Tandem Switch via both Edge Routers. The Host is connected to exactly two switches (see Figures 3 and 4). In this aspect, the two switches must be directly connected to each other, ie, without further components in between. Of course, this is merely an example, and other arrangements are within the scope of the invention.

Because the invention acts here over the host with redundant IP connection, it is possible that a link of a switch to the Edge Router, or one of the Switches, or one of the two redundant connections of the host to the Switches, or even the connection between SWITCH 1 and SWITCH 2 can fail, without it being a problem for either Downstream or Upstream Traffic. The traffic always reaches its destination (allowing for a short delay for recognizing the failure and rerouting).

According to the above-described invention, the VRRP handles redundant routing of the Sub-Network 304 (404). For example, IP-Addresses for routing data, such as provided by Pro-Gateway, are instantiated according to the known VRRP-Process. Of course, the protocol may be other than a VRRP and may generally include any redundancy protocol.

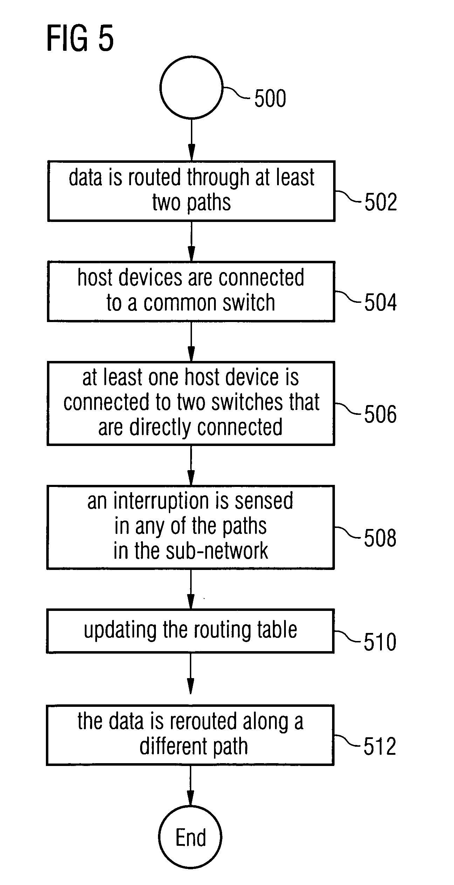

The Configuration Scheme of the present invention is illustrated in Figure 5 which shows the scheme as a process 500 for selecting or configuring switches according to various conditions of the sub-network. In step 502, the data is routed through at least two paths between the core router and at least one of the host devices via the switches. In the case of the plurality of host devices having no redundant connection, step 504, the host devices are connected to a common switch. In the case of the plurality of host devices having a redundant connection, step 506, at least one host device is connected to two switches that are directly connected to each other. Thus, an interruption is sensed in any of the paths in the sub-network in step 508. In step 510, the routing table is updated and, in step 512, the data is rerouted along a different path between the core router and the at least one of the host devices such that the interruption is circumvented.

In one aspect of the invention, the Configuration Scheme of the present invention may be applied by a soft switch that controls data traffic to/from an IP-Network to a Sub-Network according to the process steps of Figure 5. The Edge Routers, therefore, may be Media Gateways and the Hosts may be end users. The soft switch may be provided by any suitable software / control logic.

It shall be appreciated that, according to the configuration of the present invention, no separate Route Gateway Security (such as provided for the known RIP protocol) is needed. An interface interruption to the Host rectifies itself by way of the redundant Network Gateway. An interruption within the Host Area would, through the VRRP-Protocol of the Edge Router, be solved and an update of the Core Router for the IP-Download Traffic through OSPF would be controlled. With this configuration, carrier grade connections of IP-Equipment for the IP-Download Traffic can be realized. Further, carrier grade IP-Upload traffic in a VRRP system can be realized without requiring additional Security Protocol IP-Equipment.

The present invention has been described with reference to the several drawings in which specific examples of the Configuration Scheme have been illustrated. It shall be appreciated that the present invention, and its several elements, are by no means limited to the particular description or examples herein, but may include other aspects that embody the spirit of the invention.

## Claims

1. A method (500) for configuring switches for routing data between a core router to a plurality of host devices in a sub-network, wherein data is routed through at least two paths between the core router and at least one of the host devices via the switches, the method comprising the steps of:
in the case of the plurality of host devices having no redundant connection, connecting the host devices to a common switch (502),
sensing an interruption in any of the paths in the sub-network (508), and
rerouting the data along a different path of the at least two paths between the core router and the at least one of the host devices such that the interruption is circumvented (512).

2. The method according to claim 1, wherein the core router includes a routing table for routing data from the core router to the host device, further comprising the step of updating the routing table of the core router to reroute the data to avoid the interruption (510).

3. The method according to any of the preceding claims, wherein a routing device in the sub-network alternately selects paths in the sub-network according to a protocol scheme for routing the data from at least one of the host devices to the core router in case of path interruption in the sub-network, wherein the step of rerouting causes the routing device to reroute the date according to the protocol scheme (512).

4. A method (500) for configuring switches for routing data between a core router to a plurality of host devices in a sub-network, wherein data is routed through at least two paths between the core router and at least one of the host devices via the switches, the method comprising the steps of:
in the case of the plurality of host devices having a redundant connection, connecting at least one host device to two switches that are directly connected to each other (504),
sensing an interruption in any of the paths in the sub-network (508), and
rerouting the data along a different path of the at least two paths between the core router and the at least one of the host devices such that the interruption is circumvented (512).

5. The method according to claim 4, wherein the core router includes a routing table for routing data from the core router to the host device, further comprising the step of updating the routing table of the core router to reroute the data to avoid the interruption (510).

6. The method according to claims 5 or 6, wherein a routing device in the sub-network alternately selects paths in the sub-network according to a protocol scheme for routing the data from at least one of the host devices to the core router in case of path interruption in the sub-network, wherein the step of rerouting causes the routing device to reroute the date according to the protocol scheme (512).

7. An apparatus for a switch configuration (200) for routing data (208) between a core router (206) and a plurality of host devices (212a..n) in a sub-network (204), wherein the host devices (212a..n) in the sub-network (204) have no redundant connection, the apparatus comprising:
a plurality of paths (216) for routing the data in the sub-network (204) between the core router (206) and the plurality of host devices (212a..n), and
a common switch (214) connected to the plurality of paths (216) and further connected to the plurality of the host devices (212a..n) to switch the data (208) between the plurality of paths (216) and the plurality of host devices (212a..n) to provide redundant routing of the data (208) between the core router (206) and the host device (206).

8. The apparatus according to claim 7, wherein the core router (206) routes data between the Internet (202) and the sub-network (204).

9. An apparatus for a switch configuration (300) for routing data (308) between a core router (306) and a plurality of host devices in a sub-network (304), wherein the plurality of host devices in the sub-network (304) have a redundant connection, the apparatus comprising:
a first switch (314a) connected to a first path for switching data (308) routed between the core router (306) and a particular host device (312),
a second switch (314b) connected to a second path for switching data (308) routed between the core router (306) and the particular host device (312), and
wherein, the first switch (314a) is connected directly to the second switch (314b), thereby forming a tandem switch (316) to provide redundant routing of the data (308) between the core router (306) and the particular host device (312).

10. The apparatus according to claim 9, wherein the core router (306) routes data between the Internet (302) and the sub-network (304).
